# EUROPEAN PATENT APPLICATION

(11) **EP 2 594 783 A2**
(43) Date of publication of application: **22.05.2013**
(21) Application number: 12192651.3
(22) Date of filing: 14.11.2012
(51) Int. Cl.: F03D 1/00

(54) **Positioning system and method for a drive train of a wind turbine**

(30) Priority: 18.11.2011 US 201113300153
(71) Applicant: General Electric Company, Schenectady, New York 12345 (US)
(72) Inventor: Neumann, Ulrich, Greenville, SC South Carolina 29615 (US)
(74) Representative: Bedford, Grant Richard

(57) **Abstract**

A positioning system using inflatable bladders (160) for use in a wind turbine (10) is described herein. The wind turbine includes a rotor (22), a drive train assembly (20) that is supported from a support frame (16), and a drive shaft (24) rotatably coupled between the rotor and the drive train assembly. The positioning system includes an alignment assembly (120) that is coupled to a component (38) of the drive train assembly. The alignment assembly is configured to adjust an orientation of the component with respect to the drive shaft with the drive shaft at least partially inserted within the component.

## Description

The subject matter described herein relates generally to wind turbines, and more specifically, to a positioning system for use in removing a component of a drive train assembly from the wind turbine.

At least some known wind turbines include a nacelle fixed atop a tower, a drive train assembly positioned within the nacelle, and a rotor assembly coupled to the drive train assembly with a rotor shaft. At least some known drive train assemblies include a gearbox that is coupled to the drive shaft, and a generator coupled to the gearbox. In known rotor assemblies, a plurality of blades extend from a rotor, and each are oriented such that wind passing over the blades turns the rotor and rotates the shaft, thereby driving the generator to generate electricity.

Because many known wind turbines provide electrical power to utility grids, at least some wind turbines have larger components (e.g., rotors in excess of thirty-meters in diameter) that facilitate supplying greater quantities of electrical power. However, the larger components are often subjected to increased loads (e.g., asymmetric loads) that result from wind shears, yaw misalignment, and/or turbulence, and the increased loads have been known to contribute to significant fatigue cycles on the drive train components, i.e., the gearbox and/or the generator. Over time, the drive train components may become worn and/or damaged. In at least some known wind turbines, a repair and/or replacement of the drive train component requires the rotor assembly to be removed from the drive shaft, and the nacelle, drive shaft, gearbox, and generator to be removed from the wind turbine tower prior to removing the component from the drive shaft and repairing and/or replacing the damaged component. In some wind turbines, the blades are between 60 and 100 meters in length, and as such, repairing worn or damaged drive train components can be costly and time-consuming.

In one aspect according to the present invention, a positioning system for use in a wind turbine is provided. The wind turbine includes a rotor, a drive train assembly that is supported from a support frame, and a drive shaft rotatably coupled between the rotor and the drive train assembly. The positioning system includes an alignment assembly that is coupled to a component of the drive train assembly. The alignment assembly is configured to adjust an orientation of the component with respect to the drive shaft with the drive shaft at least partially inserted within the component.

In another aspect, a positioning system for use in a wind turbine is provided. The wind turbine includes a rotor, a drive train assembly supported from a support frame, and a drive shaft rotatably coupled between the rotor and the drive train assembly. The positioning system includes a positioning assembly coupled to a component of the drive train assembly and the support frame for supporting the component from the support frame. An alignment assembly is coupled between the positioning assembly and the component. The alignment assembly is configured to adjust an orientation of the component within multiple planes to facilitate removing and installing the component without removing the rotor from the wind turbine.

In yet another aspect, a method of maintaining a drive train assembly of a wind turbine is provided. The wind turbine includes a support frame, a drive train assembly supported from the support frame, and a drive shaft at least partially inserted through a component of the drive train assembly. The method includes coupling an alignment assembly to the component such that the component is supported from the support frame with the alignment assembly. An orientation of the component is adjusted with respect to a centerline axis of the drive shaft with the drive shaft at least partially inserted into the component to facilitate decoupling the component from the drive shaft.

Various aspects and embodiments of the present invention will now be described in connection with the accompanying drawings, in which:
FIG. 1 is a perspective view of an exemplary wind turbine.
FIG. 2 is schematic top view of an exemplary positioning system that may be used with the wind turbine shown in FIG. 1.
FIG. 3 is a schematic side view of the positioning system shown in FIG. 2 in a first position.
FIG. 4 is a schematic side view of the positioning system shown in FIGS. 2 and 3 in a second position.
FIG. 5 is a schematic top view of a portion of the positioning system shown in FIG. 2 and taken along area 5.
FIG. 6 is a sectional view of a portion of the positioning system shown in FIG. 5 and taken along line 6-6.
FIG. 7 is a flow chart of an exemplary method that may be used to maintain components of the wind turbine shown in FIG. 1.

The exemplary methods and systems described herein addressed at least some disadvantages of known wind turbines by providing a positioning system that is configured to remove and/or replace a drive train component uptower of a wind turbine. Moreover, the positioning system described herein includes an alignment assembly that is adapted to be coupled to a drive train component, and is configured to adjust an orientation of the component within multiple planes to facilitate coupling and/or decoupling the component from the drive shaft without removing the rotor from the drive shaft. By providing a positioning system that enables a drive train component to be coupled and/or decoupled from the drive shaft uptower of the wind turbine, the need for large lifting cranes is reduced. As such, the cost and manpower required to remove and/or replace the drive train component is significantly reduced.

As used herein, the term "uptower" is intended to be representative of any location of the wind turbine that is above a top portion of a wind turbine tower, for example, any location within or outside of the nacelle and/or rotor while the nacelle and/or rotor are coupled to the top portion of the wind turbine tower.

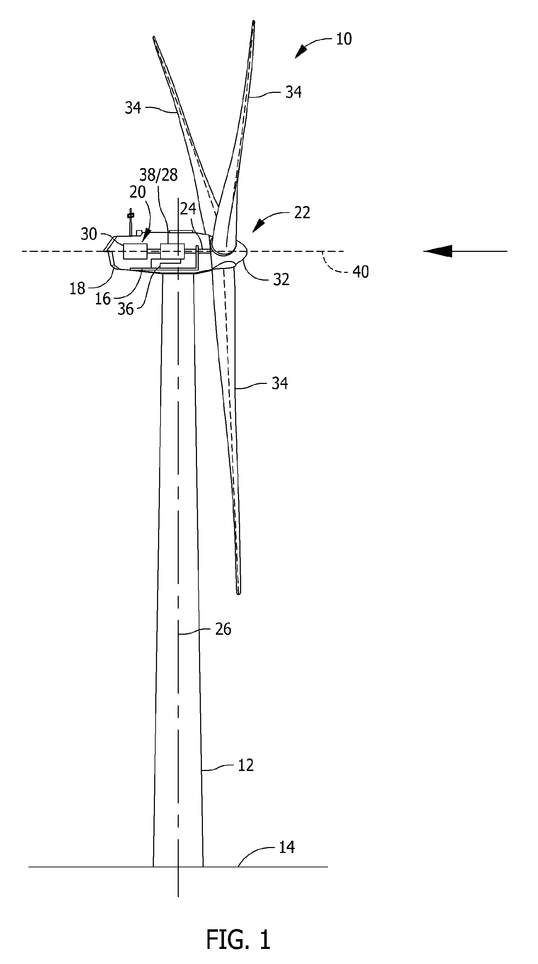

FIG. 1 is a perspective view of an exemplary wind turbine 10. In the exemplary embodiment, wind turbine 10 is a horizontal-axis wind turbine. Alternatively, wind turbine 10 may be a vertical-axis wind turbine. In the exemplary embodiment, wind turbine 10 includes a tower 12 that extends from a supporting surface 14, a support frame 16 mounted on tower 12, a nacelle 18 coupled to support frame 16, a drive train assembly 20 mounted to support frame 16 and positioned within nacelle 18, and a rotor 22 that is rotatably coupled to drive train assembly 20 with a drive shaft 24. Tower 12 extends along a centerline axis 26 between supporting surface 14 and nacelle 18. In the exemplary embodiment, drive train assembly 20 includes a gearbox 28 that is coupled to drive shaft 24, and a generator 30 coupled to gearbox 28. In an alternative embodiment, drive train assembly 20 does not include gearbox 28, and rotor 22 is rotatably coupled to generator 30 with drive shaft 24.

Rotor 22 includes a rotatable hub 32 that is coupled to drive shaft 24, and at least one rotor blade 34 coupled to and extending outwardly from hub 32. Nacelle 18, drive train assembly 20, and drive shaft 24 are each mounted to support frame 16 for supporting nacelle 18, drive train assembly 20, drive shaft 24, and rotor 22 from tower 12.

In the exemplary embodiment, rotor 22 includes three rotor blades 34. In an alternative embodiment, rotor 22 includes more or less than three rotor blades 34. Rotor blades 34 are spaced about hub 32 to facilitate rotating rotor 22 to enable kinetic energy to be transferred from the wind into usable mechanical energy, and subsequently, electrical energy. In the exemplary embodiment, each rotor blade 34 has a length ranging from about 30 meters (m) (99 feet (ft)) to about 120 m (394 ft). Alternatively, rotor blades 34 may have any suitable length that enables wind turbine 10 to function as described herein. For example, other non-limiting examples of rotor blade lengths include 10 m or less, 20 m, 37 m, or a length that is greater than 120 m.

In the exemplary embodiment, wind turbine 10 also includes a component positioning system 36 that is adapted to be coupled to a drive train component 38 such as, for example, gearbox 28 and/or generator 30, to facilitate maintaining, removing, and/or installing component 38 within nacelle 18 uptower of wind turbine 10. Positioning system 36 is removably coupled to component 38 to enable component 38 to be removed from nacelle 18 with a lifting device such as, for example, a crane supported from supporting surface 14, a gantry crane positioned within nacelle 18, a crane coupled to tower 12, a helicopter, and/or a crane supported from a floating platform and/or floating vessel.

During operation of wind turbine 10, as wind interacts with rotor blades 34, rotor 22 is rotated causing a rotation of drive shaft 24 about a centerline axis 40. A rotation of drive shaft 24 rotatably drives gearbox 28 that subsequently drives generator 30 to facilitate production of electrical power by generator 30. Over time, drive train assembly components 38 such as, for example gearbox 28 and/or generator 30, may be damaged and need to be repaired and/or replaced. Positioning system 36 enables a user to remove and/or install component 38 uptower of wind turbine 10. In addition, positioning system 36 is configured to be coupled to component 38 and to support frame 16 to facilitate decoupling component 38 from drive shaft 24 without removing drive shaft 24 from nacelle 18 and/or decoupling rotor 22 from drive shaft 24 and removing rotor 22 from wind turbine 10.

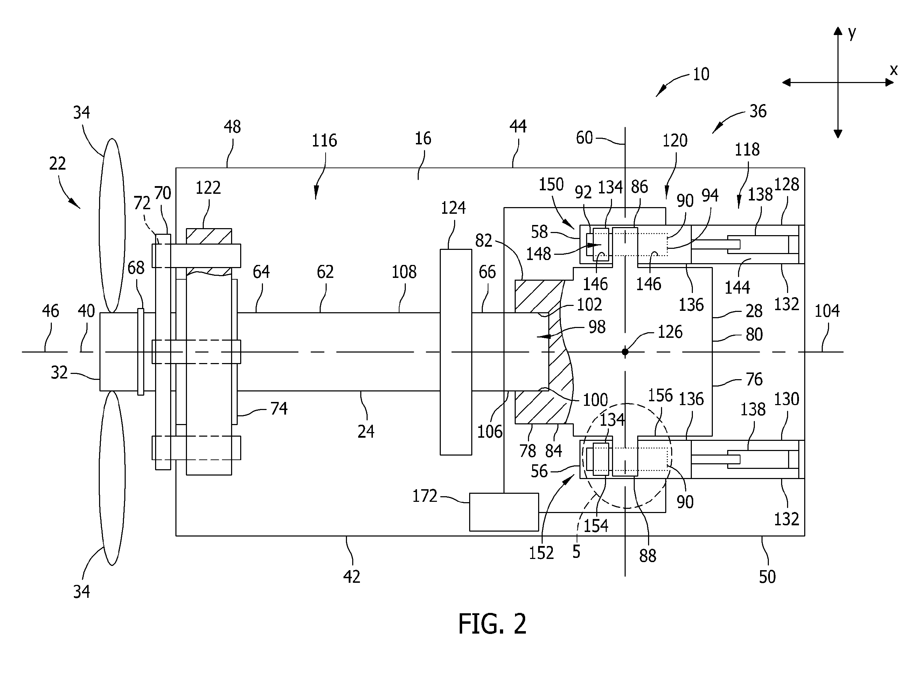

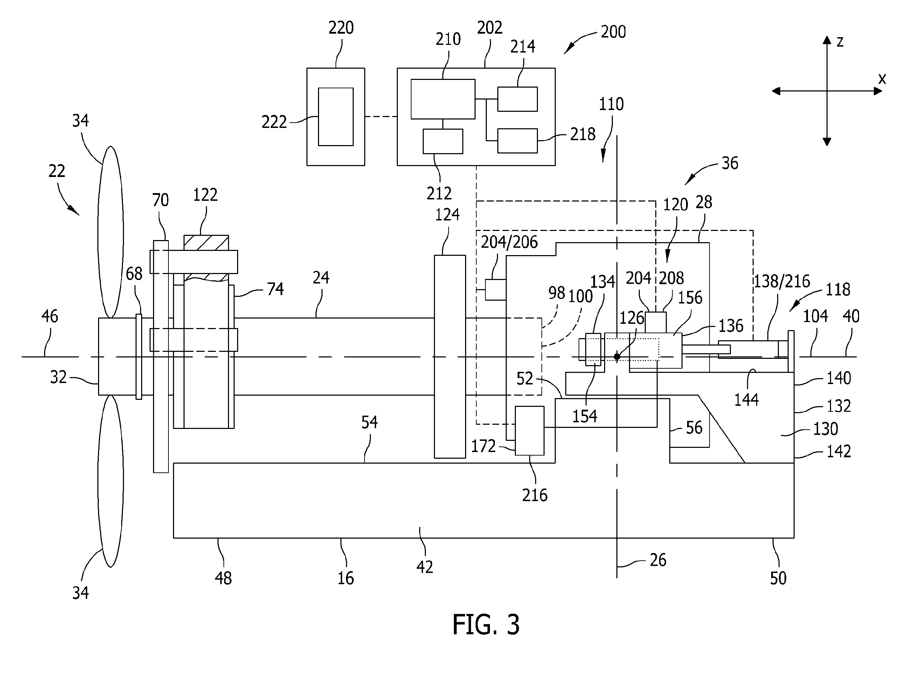

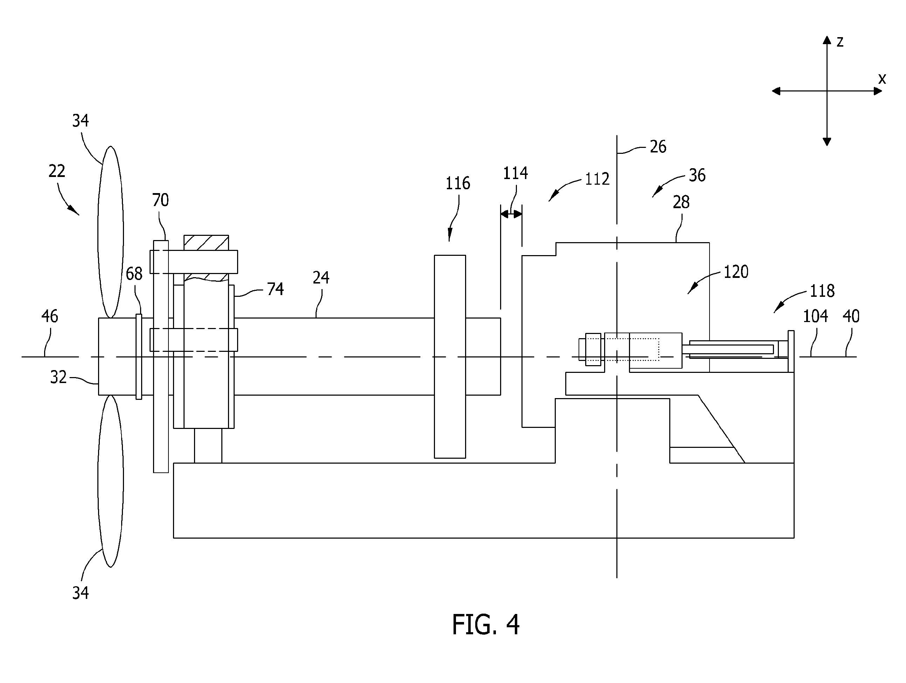

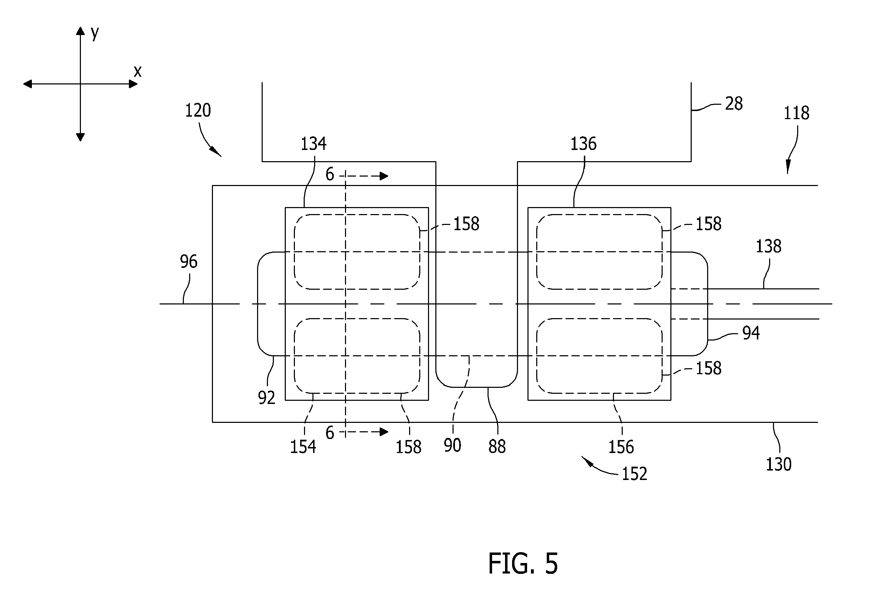

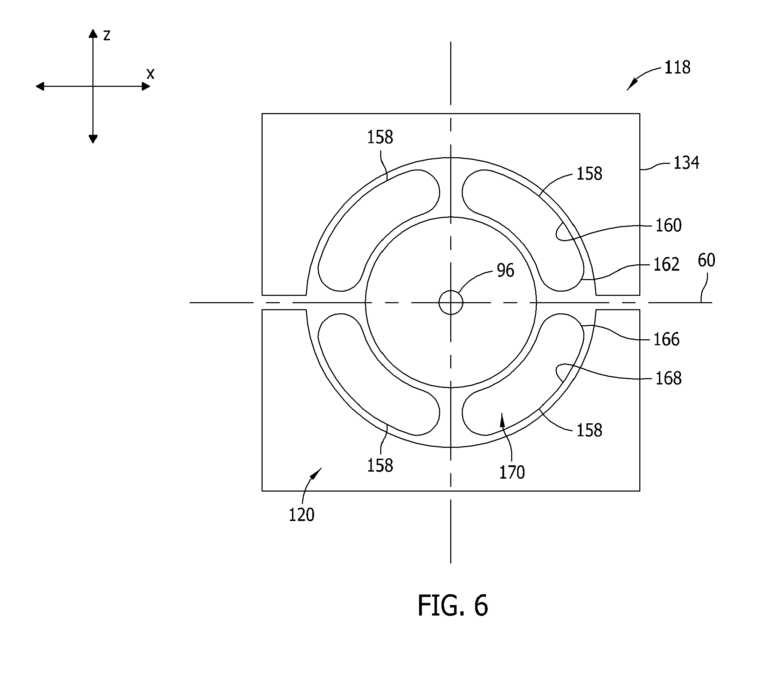

FIG. 2 is schematic top view of positioning system 36. FIG. 3 is a schematic side view of positioning system 36 in a first position. FIG. 4 is a schematic side view of positioning system 36 in a second position. FIG. 5 is a schematic top view of a portion of positioning system 36, and taken along area 5 shown in FIG. 2. FIG. 6 is a sectional view of a portion of positioning system 36, and taken along line 6-6 shown in FIG. 5. In the exemplary embodiment, support frame 16 includes a first sidewall 42 and an opposite second sidewall 44 each extending along a longitudinal axis 46 between a front section 48 and a rear section 50. First sidewall 42 and second sidewall 44 each include a top plate 52 and a bottom plate 54. A first pedestal assembly 56 is coupled to first sidewall 42 and extends between top plate 52 and bottom plate 54. A second pedestal assembly 58 is coupled to second sidewall 44 and extends between top plate 52 and bottom plate 54. Second pedestal assembly 58 is aligned with first pedestal assembly 56 along a transverse axis 60 that is perpendicular to longitudinal axis 46. First pedestal assembly 56 and second pedestal assembly 58 are each positioned between front section 48 and rear section 50.

In the exemplary embodiment, drive shaft 24 includes a substantially cylindrical body 62 that extends along shaft axis 40 between a first end 64 and a second end 66. First end 64 is coupled to rotor 22. Second end 66 is coupled to gearbox 28. Drive shaft 24 also includes a rotor flange 68 that is fixedly coupled to first end 64. Hub 32 is coupled to rotor flange 68 such that a rotation of rotor 22 facilitates rotating drive shaft 24 about shaft axis 40. Drive shaft 24 also includes a rotor locking disk 70 that extends outwardly from first end 64. Rotor locking disk 70 includes a plurality of openings 72 that are circumferentially-spaced about rotor locking disk 70. Each opening 72 extends through rotor locking disk 70 and is sized and shaped to receive a low speed rotor lock assembly (not shown) therein. The low speed rotor lock assembly is coupled to support frame 16 and is configured to engage rotor locking disk 70 to facilitate preventing a rotation of drive shaft 24 during low wind speed conditions.

Wind turbine 10 also includes at least one shaft support bearing 74 that is coupled to support frame 16 and is sized and shaped to receive drive shaft 24 therethrough. In the exemplary embodiment, shaft support bearing 74 is coupled to first end 64 of drive shaft 24 near hub 32, and is configured to facilitate radial support and alignment of drive shaft 24. Drive shaft 24 extends through shaft support bearing 74 and is supported by shaft support bearing 74 and gearbox 28. In the exemplary embodiment, rotor 22 is coupled to drive shaft 24 such that rotor 22 is supported by shaft support bearing 74 and by gearbox 28 with drive shaft 24.

In the exemplary embodiment, gearbox 28 includes a gearbox casing 76 that extends along longitudinal axis 46 between a forward portion 78 and an aft portion 80, and that extends along transverse axis 60 between a first side 82 and an opposite second side 84. Gearbox 28 also includes a first torque arm 86 and a second torque arm 88 that is opposite first torque arm 86. First torque arm 86 and second torque arm 88 each extend radially outwardly from casing 76. First torque arm 86 and second torque arm 88 each include a torque pin 90 that extends outwardly from torque arms 86 and 88, respectively. Each torque pin 90 includes a forward end 92 and an aft end 94, and extends between forward end 92 and aft end 94 along a centerline axis 96 that is substantially parallel to shaft axis 40.

In the exemplary embodiment, gearbox 28 includes an opening 98 that extends through forward portion 78 of casing 76. An input shaft 100 is positioned within opening 98 and is configured to receive second end 66 of drive shaft 24. Moreover, input shaft 100 includes a substantially circular inner surface 102 that defines opening 98 that extends along a centerline axis 104. Input shaft opening 98 is sized and shaped to receive drive shaft 24 therein such that gearbox axis 104 is oriented coaxially with drive shaft axis 40. A shrink disk 106 is coupled to input shaft 100 and extends radially outwardly from input shaft 100 such that input shaft 100 is between shrink disk 106 and drive shaft 24. Shrink disk 106 is configured to compress input shaft 100 about an outer surface 108 of drive shaft 24 to facilitate coupling input shaft 100 to drive shaft 24 via a friction fit.

In the exemplary embodiment, positioning system 36 is configured to selectively position component 38 such as, for example, gearbox 28 at a first position 110 (shown in FIG. 3), at a second position 112 (shown in FIG. 4), and at any position therebetween. In first position 110, gearbox 28 is operatively coupled to drive shaft 24 such that drive shaft 24 is at least partially inserted into gearbox opening 98 and through input shaft 100. In second position 112, gearbox 28 is operatively decoupled from drive shaft 24 and spaced a distance 114 along longitudinal axis 46 from drive shaft 24. In second position 112, drive shaft 24 is not in contact with gearbox 28, and gearbox 28 may be removed from wind turbine 10 without removing drive shaft 24 from nacelle 18 and/or uncoupling rotor 22 from drive shaft 24 and removing rotor 22 from wind turbine 10.

In the exemplary embodiment, positioning system 36 includes a shaft support assembly 116, a positioning assembly 118, and an alignment assembly 120. Shaft support assembly 116 is removably coupled to drive shaft 24 and to support frame 16 to facilitate limiting a movement of drive shaft 24. In the exemplary embodiment, shaft support assembly 116 includes a drive shaft locking assembly 122 and a restraining assembly 124. Shaft locking assembly 122 is adapted to be coupled to support frame 16 and to rotor locking disk 70 to facilitate limiting a rotation of drive shaft 24 about drive shaft axis 40. In addition, restraining assembly 124 is adapted to be coupled to support frame 16 and to drive shaft 24 to facilitate limiting an upward movement of drive shaft 24.

In the exemplary embodiment, three perpendicular axes X, Y, and Z extend through a center of gravity 126 of gearbox 28, and are used to define a three-dimensional Cartesian coordinate system relative to gearbox 28. Specifically, the X-axis is oriented to extend substantially coaxially along shaft axis 40, the Y-axis is oriented to extend substantially parallel with transverse axis 60, and the Z-axis is oriented in a vertical direction, and substantially parallel with tower axis 26. In the exemplary embodiment, positioning assembly 118 is removably coupled between gearbox 28 and support frame 16 to support gearbox 28 from support frame 16. Positioning assembly 118 is configured to move gearbox 28 bi-directionally along the X-axis with respect to drive shaft 24. Alignment assembly 120 is coupled to positioning assembly 118 and gearbox 28 to adjust an orientation of gearbox 28 within multiple reference planes to adjust an orientation of input shaft 100 with respect to drive shaft 24 to facilitate coupling and/or decoupling drive shaft 24 to gearbox 28. More specifically, alignment assembly 120 is configured to move gearbox 28 along the Y-axis and/or the Z-axis to selectively position gearbox 28 within the X-Y reference plane, the X-Z reference plane, and/or the Y-Z reference plane. In addition, alignment assembly 120 is configured to selectively rotate gearbox 28 about the X-axis, the Y-axis, and/or the Z-axis to adjust an orientation of gearbox 28 about the X-axis, Y-axis, and/or Z-axis.

In the exemplary embodiment, positioning assembly 118 includes a first control sled assembly 128, and a second control sled assembly 130. Second control sled assembly 130 is substantially similar to first control sled assembly 128. First control sled assembly 128 is coupled to first sidewall 42 and to first pedestal assembly 56. Second control sled assembly 130 is coupled to second sidewall 44 and to second pedestal assembly 58.

First control sled assembly 128 and second control sled assembly 130 each include a support sled 132, a forward support block 134, an aft support block 136 coupled to forward support block 134, and a control actuator 138 coupled to aft support block 136. Support sled 132 includes a top portion 140 and a bottom portion 142. Bottom portion 142 is supported from support frame 16 at or near rear section 50. Top portion 140 extends from bottom portion 142 and is coupled to first and second pedestal assemblies 56 and 58, respectively.

Forward support block 134 and aft support block 136 are each slideably coupled to top portion 140 to enable gearbox 28 to be selectively positioned along the X-axis with respect to drive shaft 24. Support sled 132 includes a guiderail 144 positioned between support blocks 134 and 136 and top portion 140 to facilitate moving support blocks 134 and 136 along top portion 140. In addition, forward support block 134 and aft support block 136 each include an inner surface 146 that defines a cavity 148 that is sized and shaped to receive torque pin 90 therethrough, for supporting gearbox 28 from support sled 132. More specifically, forward support block 134 is coupled to torque pin forward end 92, and aft support block 136 is coupled to torque pin aft end 94. Control actuator 138 is coupled to aft support block 136, and is configured to move support blocks 134 and 136 and gearbox 28 bi-directionally along top portion 140. In one embodiment, control actuator 138 includes a hydraulic piston. Alternatively, control actuator 138 may include a mechanical actuator, such as a screw-type actuator or any other actuator that enables positioning assembly 118 to function as described herein.

In the exemplary embodiment, alignment assembly 120 includes a first adjusting assembly 150 and a second adjusting assembly 152. First adjusting assembly 150 is coupled to first torque arm 86 and first control sled 128. Second adjusting assembly 152 is coupled to second torque arm 88 and second control sled 130. First adjusting assembly 150 and second adjusting assembly 152 each include a forward alignment assembly 154 and an aft alignment assembly 156.

In the exemplary embodiment, forward alignment assembly 154 is coupled to torque pin forward end 92, and is oriented between torque pin 90 and forward support block 134 to move torque pin 90 with respect to forward support block 134, and along the Y-axis and/or the Z-axis to selectively position gearbox 28 within the Y-Z reference plane. Aft alignment assembly 156 is coupled to torque pin aft end 94, and is oriented between aft end 94 and aft support block 136 to move torque pin 90 with respect to aft support block 136, and along the Y-axis and/or the Z-axis to selectively position gearbox 28 within the Y-Z reference plane.

Forward alignment assembly 154 and aft alignment assembly 156 each include a plurality of alignment devices 158 that are circumferentially-spaced about each torque pin 90 to adjust an orientation of gearbox 28 within the X-Y reference plane, the X-Z reference plane, and/or the Y-Z reference plane. In the exemplary embodiment, at least one alignment device 158 includes an inflatable bladder 160. Bladder 160 includes a sidewall 162 that includes a radially outer surface 166, and a radially inner surface 168 that defines a cavity 170 therein. Bladder 160 is configured to receive pressurized fluid within cavity 170 to inflate and/or deflate bladder 160 to adjust a cross-sectional area of bladder 160 to enable bladder outer surface 166 to contact torque pin 90 and support blocks 134 and 136 to move gearbox 28 with respect to drive shaft 24. In the exemplary embodiment, bladder 160 is a fabric reinforced rubberized bladder such as, for example, a 161 Series High Pressure Heavy Lifting Air Bag manufactured by Petersen Products Co., Fredonia, Wisconsin. Alternatively, alignment device 158 may include a hydraulic piston, a pneumatic piston, and/or any suitable positioning device to enable alignment assembly 120 to function as described herein.

In the exemplary embodiment, alignment assembly 120 includes a fluid control assembly 172 that is coupled to each alignment device 158 for selectively channeling a pressurized fluid to each alignment device 158 to inflate and/or deflate each bladder 160, and to selectively adjust a cross-sectional area of each alignment device 158. Moreover, fluid control assembly 172 is configured to independently adjust a volume within each alignment device 158 to adjust an orientation of gearbox 28 with respect to drive shaft 24. In one embodiment, fluid control assembly 172 includes a hydraulic pumping system that is configured to channel hydraulic fluid to each bladder 160. In another embodiment, fluid control assembly 172 includes a pneumatic system for channeling pressurized gas to each bladder 160.

In the exemplary embodiment, positioning system 36 also includes a control system 200 that is operatively coupled to positioning assembly 118 and alignment assembly 120 to selectively position gearbox 28 at first position 110, second position 112, and any position between first position 110 and second position 112. In the exemplary embodiment, control system 200 includes a controller 202 coupled in communication with a plurality of sensors 204. Each sensor 204 detects various parameters relative to the orientation and position of component 38 and drive shaft 24, and the operation of positioning system 36. Sensors 204 may include, but are not limited to only including, position sensors, vibration sensors, acceleration sensors, load sensors, and/or any other sensors that sense various parameters relative to the orientation and position of component 38 and drive shaft 24, and the operation of positioning system 36. As used herein, the term "parameters" refers to physical properties whose values can be used to define the orientation, position, and operating conditions of component 38 and drive shaft 24, such as positions, orientations, weight loading, strain loading, rotational speed, vibrations and accelerations at defined locations.

Control system 200 includes at least one first sensor 206, i.e. a position sensor, coupled to component 38 such as, for example, gearbox 28 for sensing an orientation of gearbox 28 with respect to drive shaft 24 and transmitting a signal indicative of the sensed orientation to controller 202. At least one second sensor 208, i.e. a load sensor is coupled to alignment assembly 120 for sensing a weight load supported by alignment assembly 120, and transmitting a signal indicative of the sensed weight load to controller 202.

In the exemplary embodiment, controller 202 includes a processor 210 and a memory device 212. Processor 210 includes any suitable programmable circuit which may include one or more systems and microcontrollers, microprocessors, reduced instruction set circuits (RISC), application specific integrated circuits (ASIC), programmable logic circuits (PLC), field programmable gate arrays (FPGA), and any other circuit capable of executing the functions described herein. The above examples are exemplary only, and thus are not intended to limit in any way the definition and/or meaning of the term "processor." Memory device 212 includes a computer readable medium, such as, without limitation, random access memory (RAM), flash memory, a hard disk drive, a solid state drive, a diskette, a flash drive, a compact disc, a digital video disc, and/or any suitable device that enables processor 210 to store, retrieve, and/or execute instructions and/or data.

In the exemplary embodiment, controller 202 includes a control interface 214 that controls operation of alignment assembly 120 and/or positioning assembly 118. Control interface 214 is coupled to one or more control devices 216, such as, for example, fluid control assembly 172 and/or control actuator 138. In addition, controller 202 also includes a sensor interface 218 coupled to at least one sensor 204 such as, for example, first and second sensors 206 and 208. Each sensor 204 transmits a signal corresponding to a sensed operating parameter of component 38, alignment assembly 120, and/or positioning assembly 118. Each sensor 204 may transmit a signal continuously, periodically, or only once and/or any other signal timing that enables control system 200 to function as described herein. Moreover, each sensor 204 may transmit a signal either in an analog form or in a digital form.

Controller 202 also includes a display 220 and a user interface 222. Display 220, in the exemplary embodiment, includes a vacuum fluorescent display (VFD) and/or one or more light-emitting diodes (LED). Additionally or alternatively, display 220 may include, without limitation, a liquid crystal display (LCD), a cathode ray tube (CRT), a plasma display, and/or any suitable visual output device capable of displaying graphical data and/or text to a user. In an exemplary embodiment, a component position, a component orientation, a weight loading, and/or any other information may be displayed to a user on display 220. User interface 222 includes, without limitation, a keyboard, a keypad, a touch-sensitive screen, a scroll wheel, a pointing device, an audio input device employing speech-recognition software, and/or any suitable device that enables a user to input data into controller 202 and/or to retrieve data from controller 202. In one embodiment, user interface 222 is integrated with display 220 such that user interface 222 is accessed by a user via display 220. In the exemplary embodiment, the user may input control parameters into controller 202 using user interface 222 to control an operation of alignment assembly 120 and/or positioning assembly 118 to facilitate coupling and/or decoupling component 38 from drive shaft 24, and removing component 38 from wind turbine 10.

Various connections are available between control interface 214 and control device 216, between sensor interface 218 and sensors 204, and between processor 210, memory device 212, display 220, and user interface 222. Such connections may include, without limitation, an electrical conductor, a low-level serial data connection, such as Recommended Standard (RS) 232 or RS-485, a high-level serial data connection, such as Universal Serial Bus (USB) or Institute of Electrical and Electronics Engineers (IEEE) 1394 (a/k/a FIREWIRE), a parallel data connection, such as IEEE 1284 or IEEE 488, a short-range wireless communication channel such as BLUETOOTH, and/or a private (e.g., inaccessible outside wind turbine 10) network connection, whether wired or wireless.

In the exemplary embodiment, controller 202 is configured to operate positioning system 36 to couple and/or decouple gearbox 28 from drive shaft 24. During removal of gearbox 28 from drive shaft 24, controller 202 receives a signal from first sensor 206 that is indicative of a position and orientation of gearbox 28 with respect to drive shaft 24. Controller 202 operates fluid control assembly 172 to selectively channel pressurized fluid to each alignment device 158 to adjust an orientation of gearbox 28 with respect to drive shaft axis 40 to facilitate decoupling gearbox 28 from drive shaft 24 such that gearbox 28 can be moved with respect to drive shaft 24 without damaging drive shaft 24 and/or gearbox 28. Controller 202 also receives a signal from second sensor 208 that is indicative of the weight load supported from alignment assembly 120, and operates each alignment device 158 to adjust a weight of gearbox 28 being supported from alignment assembly 120 to facilitate decoupling gearbox 28 from drive shaft 24. During operation, as controller 202 adjusts an orientation of gearbox 28 with respect to drive shaft 24, controller 202 also operates control actuator 138 to move gearbox 28 away from drive shaft 24 along longitudinal axis 46 to move gearbox 28 from first position 110 to second position 112.

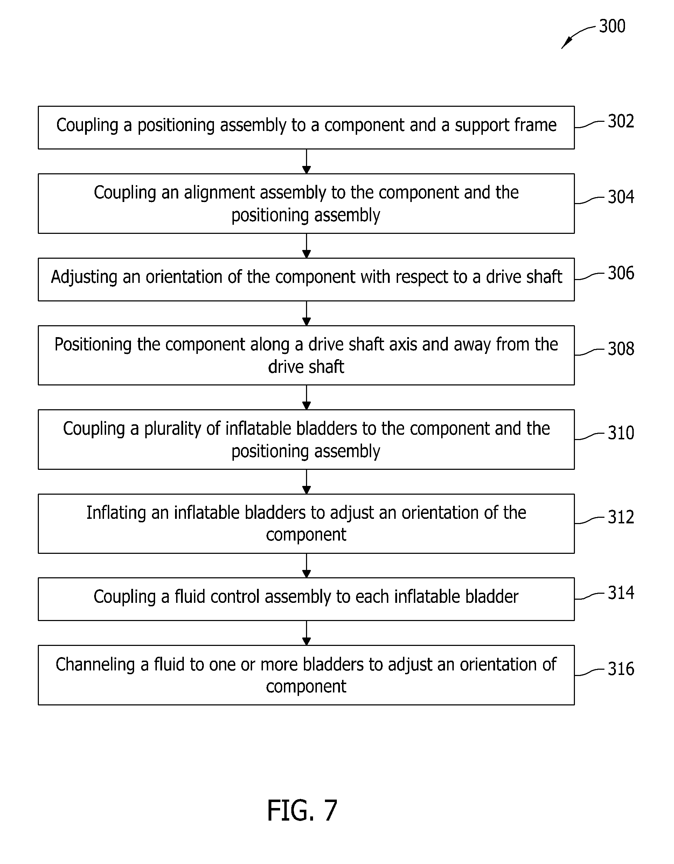

FIG. 7 is a flow chart of an exemplary method 300 that may be used to maintain components of wind turbine 10. In the exemplary embodiment, method 300 includes coupling 302 positioning assembly 118 to component 38 and to support frame 16. Alignment assembly 120 is coupled 304 to component 38 and positioning assembly 118 such that component 38 is supported from positioning assembly 118 with alignment assembly 120. Method 300 includes adjusting 306 an orientation of component 38 with respect to drive shaft axis 40 to facilitate decoupling component 38 from drive shaft 24. In addition, method 300 includes positioning 308 component 38 along shaft axis 40 and away from drive shaft 24 to decouple component 38 from drive shaft 24. Method 300 also includes coupling 310 a plurality of inflatable bladders 160 to component 38 and positioning assembly 118, and selectively inflating 312 one or more inflatable bladders 160 to adjust an orientation of component 38 with respect to drive shaft 24. Moreover, method 300 includes coupling 314 fluid control assembly 172 to each inflatable bladder 160, and selectively channeling 316 fluid to one or more bladders 160 to adjust an orientation of component 38 with respect to drive shaft 24.

The above-described systems and methods may facilitate removing and/or replacing a drive train component uptower of the wind turbine without requiring removal of the nacelle, the rotor, and/or the drive shaft. The ability to remove and/or replace a drive train component without removing the nacelle, the rotor, and/or the drive shaft from the wind turbine eliminates the need for large lifting cranes required to move the rotor and/or the nacelle. As such, the cost and manpower required to remove and/or replace the component from a wind turbine is significantly reduced. Reducing such costs extends the operational life expectancies of wind turbine systems.

Exemplary embodiments of systems and methods positioning a drive train component are described above in detail. The systems and methods are not limited to the specific embodiments described herein, but rather, components of the assemblies and/or steps of the methods may be utilized independently and separately from other components and/or steps described herein. For example, the methods may also be used in combination with other wind turbine components, and are not limited to practice with only the wind turbine systems as described herein. Rather, the exemplary embodiment can be implemented and utilized in connection with many other wind turbine applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A positioning system for use in a wind turbine, the wind turbine including a rotor, a drive train assembly supported from a support frame, and a drive shaft rotatably coupled between the rotor and the drive train assembly, said positioning system comprising an alignment assembly coupled to a component of the drive train assembly, said alignment assembly configured to adjust an orientation of the component with respect to the drive shaft with the drive shaft at least partially inserted within the component.
2. A positioning system in accordance with clause 1, further comprising a positioning assembly coupled to the component and the support frame for moving the component with respect to the support frame.
3. A positioning system in accordance with any preceding clause, wherein said alignment assembly comprises a plurality of alignment devices coupled to the component and said positioning assembly.
4. A positioning system in accordance with any preceding clause, wherein said alignment assembly further comprises a fluid control assembly coupled to each alignment device of said plurality of alignment devices for selectively channeling a fluid to each said alignment device to adjust a volume of each said alignment device to adjust an orientation of the component.
5. A positioning system in accordance with any preceding clause, wherein at least one alignment device of said plurality of alignment devices comprises an inflatable bladder.
6. A positioning system in accordance with any preceding clause, wherein said alignment assembly comprises a plurality of aft alignment devices coupled to an aft portion of the component for adjusting an orientation of the component aft portion with respect to the drive shaft.
7. A positioning system in accordance with any preceding clause, wherein said alignment assembly comprises a plurality of forward alignment devices coupled to a forward portion of the component for adjusting an orientation of the component forward portion with respect to the drive shaft.
8. A positioning system in accordance with any preceding clause, further comprising a control system coupled to said positioning assembly and to said alignment assembly, said control system configured to selectively position the component at a first position wherein the component is operatively coupled to the drive shaft, at a second position wherein the component is operatively decoupled and spaced from the drive shaft, and at any position therebetween.
9. A positioning system for use in a wind turbine, the wind turbine including a rotor, a drive train assembly supported from a support frame, and a drive shaft rotatably coupled between the rotor and the drive train assembly, said positioning system comprising:
   a positioning assembly coupled to a component of the drive train assembly and the support frame for supporting the component from the support frame; and,
   an alignment assembly coupled between said positioning assembly and the component, said alignment assembly configured to adjust an orientation of the component within multiple planes to facilitate removing and installing the component without removing the rotor from the wind turbine.
10. A positioning system in accordance with any preceding clause, wherein said positioning assembly is configured to move the component along a centerline axis of the drive shaft.
11. A positioning system in accordance with any preceding clause, wherein said alignment assembly comprises a plurality of alignment devices coupled to said component and to said positioning assembly.
12. A positioning system in accordance with any preceding clause, wherein said alignment assembly further comprises a fluid control assembly coupled to each alignment device of said plurality of alignment devices for selectively channeling a fluid to each said alignment device to adjust a volume of each said alignment device to adjust an orientation of said component.
13. A positioning system in accordance with any preceding clause, wherein at least one alignment device of said plurality of alignment devices comprises an inflatable bladder.
14. A positioning system in accordance with any preceding clause, wherein said alignment assembly comprises a plurality of aft alignment devices coupled to an aft portion of said component for adjusting an orientation of said component aft portion with respect said drive shaft.
15. A positioning system in accordance with any preceding clause, wherein said alignment assembly comprises a plurality of forward alignment devices coupled to a forward portion of said component for adjusting an orientation of said component forward portion with respect to said drive shaft.
16. A positioning system in accordance with any preceding clause, further comprising a control system coupled to said positioning assembly and to said alignment assembly, said control system configured to selectively position said component at a first position wherein said component is operatively coupled to said drive shaft, at a second position wherein said component is operatively decoupled and spaced from said drive shaft, and at any position therebetween.
17. A method of maintaining a drive train assembly of a wind turbine wherein the wind turbine includes a support frame, a drive train assembly supported from the support frame, and a drive shaft at least partially inserted through a component of the drive train assembly, said method comprising:
   coupling an alignment assembly to the component such that the component is supported from the support frame with the alignment assembly; and, adjusting an orientation of the component with respect to a centerline axis of the drive shaft with the drive shaft at least partially inserted into the component to facilitate decoupling the component from the drive shaft.
18. A method in accordance with any preceding clause, further comprising coupling a positioning assembly to the component and the support frame, wherein the alignment assembly is coupled between the positioning assembly and the component, the positioning assembly configured to position the component along the centerline axis and away from the drive shaft to decouple the component from the drive shaft.
19. A method in accordance with any preceding clause, further comprising:
   coupling a plurality of inflatable bladders to the component and the positioning device; and
   selectively inflating one or more of the plurality of inflatable bladders to adjust the orientation of the component with respect to the drive shaft.
20. A method in accordance with any preceding clause, further comprising;
   coupling a fluid control assembly to each inflatable bladder of the plurality of bladders; and
   selectively channel a fluid to one or more bladders to adjust an orientation of the component with respect to the drive shaft.

## Claims

1. A positioning system (36) for use in a wind turbine (10), the wind turbine including a rotor (22), a drive train assembly (20) supported from a support frame (16), and a drive shaft (24) rotatably coupled between the rotor and the drive train assembly, said positioning system comprising an alignment assembly (120) coupled to a component (38) of the drive train assembly, said alignment assembly configured to adjust an orientation of the component with respect to the drive shaft with the drive shaft at least partially inserted within the component.

2. A positioning system (36) in accordance with claim 1, further comprising a positioning assembly (118) coupled to the component (38) and the support frame (16) for moving the component with respect to the support frame.

3. A positioning system (36) in accordance with any preceding claim, wherein said alignment assembly (120) comprises a plurality of alignment devices (158) coupled to the component (38) and said positioning assembly (118).

4. A positioning system (36) in accordance with any preceding claim, wherein said alignment assembly (120) further comprises a fluid control assembly (172) coupled to each alignment device (158) of said plurality of alignment devices for selectively channeling a fluid to each said alignment device to adjust a volume of each said alignment device to adjust an orientation of the component (38).

5. A positioning system (36) in accordance with any preceding claim, wherein at least one alignment device (158) of said plurality of alignment devices comprises an inflatable bladder (160).

6. A positioning system (36) in accordance with any preceding claim, wherein said alignment assembly (120) comprises a plurality of aft alignment devices (156) coupled to an aft portion (80) of the component (38) for adjusting an orientation of the component aft portion with respect to the drive shaft (24).

7. A positioning system (36) in accordance with any preceding claim, wherein said alignment assembly (120) comprises a plurality of forward alignment devices (154) coupled to a forward portion (78) of the component (38) for adjusting an orientation of the component forward portion with respect to the drive shaft (24).

8. A positioning system (36) in accordance with any preceding claim, further comprising a control system (200) coupled to said positioning assembly (118) and to said alignment assembly (120), said control system configured to selectively position the component (38) at a first position wherein the component is operatively coupled to the drive shaft (24), at a second position wherein the component is operatively decoupled and spaced from the drive shaft, and at any position therebetween.

9. A positioning system (36) for use in a wind turbine (10), the wind turbine including a rotor (22), a drive train assembly (20) supported from a support frame (16), and a drive shaft (24) rotatably coupled between the rotor and the drive train assembly, said positioning system comprising:
a positioning assembly (118) coupled to a component (38) of the drive train assembly and the support frame for supporting the component from the support frame; and
an alignment assembly (120) coupled between said positioning assembly and the component, said alignment assembly configured to adjust an orientation of the component within multiple planes to facilitate removing and installing the component without removing the rotor from the wind turbine.

10. A positioning system (36) in accordance with claim 9, wherein said positioning assembly (118) is configured to move the component (38) along a centerline axis of the drive shaft (24).
